# EUROPÄISCHE PATENTSCHRIFT

(11) **EP 2 607 144 B1**
(45) Veröffentlichungstag und Bekanntmachung des Hinweises auf die Patenterteilung: **18.03.2020**
(21) Anmeldenummer: 11194290.0
(22) Anmeldetag: 19.12.2011
(51) Int. Cl.: B60L 3/12

(54) **Verfahren zum Ermitteln eines technischen Zustands eines elektrisch angetriebenen Kraftfahrzeugs und Kraftfahrzeug**
Method for determining a technical condition of an electrically powered motor vehicle and motor vehicle
Procédé de détermination d'un état technique d'un véhicule automobile entraîné de manière électrique et véhicule automobile

(43) Veröffentlichungstag der Anmeldung: 26.06.2013
(73) Patentinhaber: Valeo Siemens eAutomotive Germany GmbH, 91056 Erlangen (DE)
(72) Erfinder: Bittner, Roland, 91522 Ansbach (DE); Hösle, Markus, 91058 Erlangen (DE)
(74) Vertreter: Dr. Gassner & Partner mbB

(56) Entgegenhaltungen:
- WO-A1-2004/049161
- US-A- 5 445 347
- US-A1- 2008 119 982
- US-A1- 2010 256 851
- US-B1- 6 487 478

## Beschreibung

Die Erfindung betrifft ein Verfahren zum Ermitteln eines technischen Zustands eines elektrisch angetriebenen Kraftfahrzeugs. Das Kraftfahrzeug wird mittels eines elektrischen Antriebsmotors angetrieben, der mit einer elektrischen Versorgungsspannung versorgt wird. Diese Versorgungsspannung wird aus einer Batteriespannung, insbesondere einer Traktionsbatterie, mithilfe einer Schaltungsanordnung bereitgestellt. Die Erfindung betrifft außerdem ein elektrisch angetriebenes Kraftfahrzeug mit einem elektrischen Antriebsmotor.

Elektrisch angetriebene Kraftfahrzeuge - sei es Elektrofahrzeuge, sei es Hybridfahrzeuge - sind bereits Stand der Technik. Sie beinhalten einen elektrischen Antriebsmotor, welcher in der Regel als eine Synchronmaschine bzw. ein bürstenloser Gleichstrommotor ausgeführt ist. Zur Versorgung des Antriebsmotors mit elektrischer Energie wird eine Batterie - die so genannte "Traktionsbatterie" - bereitgestellt, welche eine elektrische Gleichspannung erzeugt, nämlich die Batteriespannung. Aus dieser Gleichspannung wird dann eine Versorgungsspannung für den Antriebsmotor bereitgestellt, welche eine Wechselspannung ist. Zu diesem Zwecke wird eine Schaltungsanordnung eingesetzt, welche einen Wechselrichter bzw. Inverter aufweist, der aus mehreren Transistoren besteht (in der Regel IGBTs). Die Einstellung der Drehzahl des Antriebsmotors erfolgt hierbei durch Steuerung der Schaltfrequenz der Transistoren, also der Frequenz der Versorgungsspannung.

Eine besondere Herausforderung besteht darin, den Wiederverkaufswert eines elektrisch angetriebenen Kraftfahrzeugs zu ermitteln. Anders als bei herkömmlichen Kraftfahrzeugen, die (ausschließlich) mithilfe einer Brennkraftmaschine angetrieben werden, ist der Parameter "Kilometerstand" bei elektrisch angetriebenen Kraftfahrzeugen wenig aussagekräftig. So kann beispielsweise selbst bei einem relativ geringen Kilometerstand der technische Zustand des Kraftfahrzeugs unbefriedigend sein, nämlich etwa bei einem hoch beanspruchten Antriebsmotor und/oder Wechselrichter. Alleine der Parameter "Kilometerstand" ist somit nicht oder nur wenig dazu geeignet, den technischen Zustand eines elektrisch angetriebenen Kraftfahrzeugs zu beschreiben. Bei einer Vielzahl von auf dem Markt vorhandenen Elektrofahrzeugen stellt sich somit die Problematik, wie deren technischer Zustand und davon abhängig der Wiederverkaufswert ermittelt werden kann.

Aus dem Dokument WO 2004/049161 A1 ist ein System bekannt, welches zur Instandhaltung eines Kraftfahrzeugs dient. Das System ist dazu ausgebildet, einen potentiellen Ausfall einer Komponente des Kraftfahrzeugs unter Verwendung von statistischen Methoden festzustellen. Als Komponente kann beispielsweise der Motor des Kraftfahrzeugs, ein Lenksystem, ein Bremssystem, eine Fahrzeugbatterie oder eine Lichtmaschine vorgesehen sein.

Das Dokument US 2010/0256851 A1 beschreibt eine Steuereinheit für ein Hybridfahrzeug, welche zur Diagnose eines Generators und eines Inverters ausgebildet ist. Der Inverter wandelt dabei die Wechselspannung eines Generators in eine Gleichspannung, mit welcher eine Fahrzeugbatterie aufgeladen wird.

Eine Vorrichtung zur Aufzeichnung einer Leistungsaufnahme eines Hybridfahrzeugs ist beispielsweise aus dem Dokument US 2008/0119982 A1 bekannt.

Es ist Aufgabe der Erfindung, einen Weg aufzuzeigen, wie bei einem Verfahren der eingangs genannten Gattung der technische Zustand des Kraftfahrzeugs besonders realitätsgetreu ermittelt werden kann.

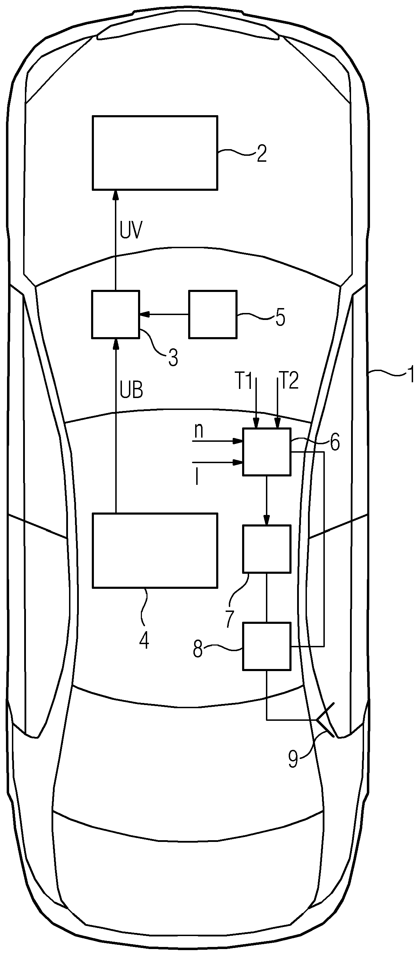

Diese Aufgabe wird erfindungsgemäß durch ein Verfahren sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Bei einem erfindungsgemäßen Verfahren zum Ermitteln eines technischen Zustands eines elektrisch angetriebenen Kraftfahrzeugs wird selbiges Fahrzeug mittels eines elektrischen Antriebsmotors angetrieben, der mit einer elektrischen Versorgungsspannung versorgt wird. Diese Versorgungsspannung wird aus einer Batteriespannung mittels einer Schaltungsanordnung - insbesondere mittels eines Wechselrichters - bereitgestellt. Es wird zumindest ein Betriebsparameter der Schaltungsanordnung, und insbesondere auch des Antriebsmotors, im Betrieb des Kraftfahrzeugs erfasst, und zwar mittels einer Recheneinrichtung. Zu dem zumindest einen Betriebsparameter werden in einer Speichereinrichtung Parameterwerte abgespeichert, anhand derer der technische Zustand ermittelt wird. Dabei werden zur Ermittlung des technischen Zustands ausschließlich Maximalwerte und/oder Minimalwerte des Betriebsparameters herangezogen. In der Speichereinrichtung werden ausschließlich solche Parameterwerte des Betriebsparameters abgespeichert, welche größer als ein vorgegebener Maximalgrenzwert sind und/oder solche Parameterwerte, welche kleiner als ein vorgegebener Minimalgrenzwert sind. Hierdurch kann der Speicherplatz gespart bzw. die Speicherkapazitäten geschont werden; andererseits kann somit auch eine kleinere Speichereinrichtung eingesetzt werden, sodass insgesamt Kosten gespart werden können, wie auch der wertvolle Bauraum. Es wird also verhindert, dass alle - auch nicht relevante - Parameterwerte des Betriebsparameters abgespeichert werden, die grundsätzlich keinerlei Aussage über den technischen Zustand des Kraftfahrzeugs erlauben. Man kann sich dies beispielsweise anhand einer Temperatur besser vorstellen: Während die normalen, nicht-kritischen Temperaturwerte keinerlei Aussage über den technischen Zustand des Antriebsmotors liefern, kann anhand von maximalen Temperaturwerten des Motors, die nur gelegentlich auftreten, die tatsächliche Beanspruchung des Motors präziser eingeschätzt werden. Selbiges gilt beispielsweise auch für den elektrischen Strom.

Also wird der erfindungsgemäße Effekt dadurch erzielt, dass der technische Zustand des elektrisch angetriebenen Kraftfahrzeugs anhand von Parameterwerten eines Betriebsparameters ermittelt wird, die den technischen Zustand des elektrischen Antriebsmotors und/oder der Schaltungsanordnung widerspiegeln. Die Erfindung beruht dabei auf der Erkenntnis, dass alleine der Parameter "Kilometerstand" bei elektrisch angetriebenen Kraftfahrzeugen relativ wenig aussagekräftig ist bzw. den tatsächlichen technischen Zustand der Schaltungsanordnung und des elektrischen Antriebsmotors nicht wiedergibt. Die Erkenntnis besteht weiterhin darin, dass der technische Zustand eines elektrisch angetriebenen Kraftfahrzeugs grundsätzlich von dem technischen Zustand des elektrischen Antriebsmotors und der Schaltungsanordnung abhängig ist. Die Erfindung geht nun den Weg, im Betrieb des Kraftfahrzeugs in einer Speichereinrichtung Parameterwerte eines Betriebsparameters abzuspeichern, welche eine bessere Aussage darüber erlauben, in welchem technischen Zustand der elektrische Antriebsmotor und/oder die Schaltungsanordnung ist/sind. Auf diesem Wege gelingt es, den technischen Zustand des Kraftfahrzeugs im Vergleich zum Stand der Technik realitätsgetreuer zu ermitteln.

Hinsichtlich der Ermittlung des technischen Zustands des Kraftfahrzeugs sind vorliegend grundsätzlich zwei unterschiedliche Ausführungsformen vorgesehen:
Zum einen kann es die interne Recheneinrichtung des Kraftfahrzeugs sein, welche den technischen Zustand anhand der Parameterwerte des Betriebsparameters ermittelt. Diese Ausführungsform hat den Vorteil, dass die Information über den technischen Zustand im Kraftfahrzeug selbst vorliegt und beispielsweise dem Fahrer angezeigt werden kann, nämlich insbesondere auf einer Instrumententafel oder dergleichen. In vorteilhafter Weise kann diese Information über den technischen Zustand auch einem fahrzeuginternen Fahrerassistenzsystem zur Verfügung gestellt werden, und dieses Fahrerassistenzsystem kann seine Funktionalitäten auch unter Berücksichtigung des technischen Zustands des Kraftfahrzeugs bereitstellen.

Zum anderen kann - ergänzend oder alternativ - vorgesehen sein, dass Daten mit den Parameterwerten von einer fahrzeuginternen Kommunikationseinrichtung an eine fahrzeugexterne Recheneinrichtung übertragen werden. Dann kann der technische Zustand auch mittels der fahrzeugexternen Recheneinrichtung ermittelt werden. Diese Ausführungsform erweist sich beispielsweise in einer Werkstatt als besonders vorteilhaft: Die im Fahrzeug abgelegten Parameterwerte können an einen externen Rechner übertragen werden, und der Mechaniker kann sich einerseits die Parameterwerte ansehen und andererseits auch aus diesen Parameterwerten den technischen Zustand des Kraftfahrzeugs ermitteln. Bei dieser Ausführungsform können die Parameterwerte aber auch an eine Recheneinrichtung bzw. einen Server des Fahrzeugherstellers übermittelt werden, sodass dem Fahrzeughersteller die Möglichkeit gegeben wird, eine Datenbank zu führen und die Daten unterschiedlichster Kraftfahrzeuge auszuwerten. Der Fahrzeughersteller kann beispielsweise untersuchen, wie sich die technischen Zustände unterschiedlichster Kraftfahrzeuge mit der Zeit verändern. Die fahrzeugseitige Kommunikationseinrichtung kann zur drahtlosen Kommunikation ausgebildet sein. Ergänzend oder alternativ kann aber auch eine drahtgebundene Schnittstelle am Kraftfahrzeug bereitgestellt sein, über welche die fahrzeugexterne Recheneinrichtung an die fahrzeugseitige Kommunikationseinrichtung angeschlossen werden kann, etwa über ein Kabel.

Es erweist sich als besonders vorteilhaft, wenn als Betriebsparameter ein elektrischer Parameter des Antriebsmotors und/oder der Schaltungsanordnung erfasst wird. Aus den Parameterwerten des elektrischen Parameters kann nämlich der technische Zustand des Kraftfahrzeugs hinsichtlich der elektrischen Eigenschaften des Antriebsmotors bzw. der Schaltungsanordnung ermittelt werden, sodass die elektrischen Eigenschaften in den zu ermittelnden technischen Zustand des Kraftfahrzeugs mit einfließen.

Besonders bevorzugt ist es, wenn zur Ermittlung des technischen Zustands ausschließlich solche Parameterwerte des Betriebsparameters abgespeichert, welche in einem vorgegebenen Wertebereich liegen Hierdurch kann der Speicherplatz gespart bzw. die Speicherkapazitäten geschont werden; andererseits kann somit auch eine kleinere Speichereinrichtung eingesetzt werden, sodass insgesamt Kosten gespart werden können, wie auch der wertvolle Bauraum. Durch diese Ausführungsform wird also verhindert, dass alle - auch nicht relevante - Parameterwerte des Betriebsparameters abgespeichert werden, die grundsätzlich keinerlei Aussage über den technischen Zustand des Kraftfahrzeugs erlauben.

Liegen in der Speichereinrichtung Parameterwerte des Betriebsparameters vor, die größer als der Maximalgrenzwert bzw. kleiner als der Minimalgrenzwert sind, so kann auch eine Häufigkeit errechnet werden, mit welcher der Betriebsparameter den Maximalgrenzwert überschreitet und/oder den Minimalgrenzwert unterschreitet. Dann kann der technische Zustand in Abhängigkeit von dieser Häufigkeit ermittelt werden. Die Häufigkeit des Überschreitens des Maximalgrenzwerts bzw. des Unterschreitens des Minimalgrenzwerts liefert nämlich eine zuverlässige Aussage über die Beanspruchung des Antriebsmotors bzw. der Schaltungsanordnung und somit ebenfalls eine aussagekräftige Information über den technischen Zustand des Kraftfahrzeugs.

Hinsichtlich des abgespeicherten Betriebsparameters können unterschiedlichste Ausführungsformen vorgesehen sein. Zum Beispiel wird als Betriebsparameter zumindest einer der folgenden Betriebsparameter erfasst:
- eine Temperatur der Schaltungsanordnung und/oder
- eine Temperatur des Antriebsmotors, insbesondere des Stators und/oder des Rotors, und/oder
- eine Drehzahl des Antriebsmotors und/oder
- ein elektrischer Strom, der in der Schaltungsanordnung - etwa im Wechselrichter - und/oder in dem Antriebsmotor fließt, etwa durch eine Statorwicklung, und/oder
- eine Anzahl von Umdrehungen des Antriebsmotors und/oder
- das Alter der Schaltungsanordnung und/oder des Antriebsmotors.

Alle diese Parameter erlauben es, den technischen Zustand des Kraftfahrzeugs besonders präzise und realitätsgetreu zu ermitteln.

Als Betriebsparameter kann auch die Anzahl bzw. die Häufigkeit von Werkstattbesuchen des Kraftfahrzeugs erfasst werden. Zu diesem Zwecke kann beispielsweise die Anzahl bzw. die Häufigkeit erfasst werden, mit welcher die externe Recheneinrichtung an die fahrzeuginterne Kommunikationseinrichtung angeschlossen wird. Auch die Häufigkeit bzw. die Anzahl der Werkstattbesuche bzw. Kundendienstbesuche liefert nämlich eine Aussage über den technischen Zustand des Kraftfahrzeugs.

Also wird anhand der abgespeicherten Parameterwerte der technische Zustand des Kraftfahrzeugs ermittelt. Als technischer Zustand kann zumindest einer der folgenden Fahrzeugparameter ermittelt werden:
- eine maximale Lebensdauer des Antriebsmotors und/oder eine maximale Lebensdauer der Schaltungsanordnung und/oder
- ein Abnutzungsgrad eines Stators und/oder eines Rotors des Antriebsmotors und/oder
- ein Abnutzungsgrad der Schaltungsanordnung und/oder
- eine Zeitdauer bis zu einer nächsten Wartung des Antriebsmotors und/oder der Schaltungsanordnung und/oder
- eine Laufleistung des Antriebsmotors und/oder
- ein Abnutzungsgrad einer Isolation der Schaltungsanordnung und/oder des Antriebsmotors.

All die genannten Fahrzeugparameter liefern eine eindeutige Aussage über den Wiederverkaufswert des Kraftfahrzeugs bzw. darüber, in welchem technischen Zustand sich das Kraftfahrzeug - und insbesondere der Antriebsmotor bzw. die Schaltungsanordnung - befindet.

Auch hinsichtlich der Ausgestaltung der Speichereinrichtung können unterschiedlichste Ausführungsformen vorgesehen sein: Zum einen kann die Speichereinrichtung einen RAM-Speicher aufweisen, in welchem die Parameterwerte des Betriebsparameters im Betrieb des Kraftfahrzeugs abgespeichert werden. Ein RAM bietet dabei die Möglichkeit, die Parameterwerte besonders rasch und sicher abzuspeichern sowie zuverlässig wieder auszulesen. Ergänzend oder alternativ kann die Speichereinrichtung auch einen RFID-Speicher beinhalten, in welchem die Parameterwerte abgespeichert werden. Dies hat den Vorteil, dass die RFID-Technologie gleichzeitig auch eine drahtlose Übertragung der Parameterwerte ermöglicht. So können beispielsweise die genannten Kommunikationseinrichtung sowie der Speicher in ein gemeinsames RFID-Modul integriert sein, welches insgesamt zwei unterschiedliche Funktionen übernimmt: einerseits die Funktion des Abspeicherns der Parameterwerte sowie andererseits auch die Funktion der (drahtlosen) Datenübertragung. Durch ein derartiges gemeinsames RFID-Modul kann der wertvolle Bauraum im Kraftfahrzeug gespart werden.

Um den Platzbedarf für die Recheneinrichtung und/oder die Speichereinrichtung im Kraftfahrzeug auf ein Minimum zu reduzieren, kann/können die Recheneinrichtung und/oder die Speichereinrichtung in den Antriebsmotor integriert sein. Beispielsweise ist zumindest eine der genannten Komponenten in ein Blechpaket oder aber einen Wickelkopfverguss des Antriebsmotors eingelassen. Somit wird kein zusätzlicher Bauraum durch die Recheneinrichtung bzw. die Speichereinrichtung beansprucht.

Ergänzend oder alternativ kann/können die Recheneinrichtung und/oder die Speichereinrichtung in einen Wechselrichter der Schaltungsanordnung integriert sein; zumindest eine der genannten Komponenten kann in einen IGBT-Stapel (Transistorenstapel) eingelassen sein. Auch somit ist der Platzbedarf reduziert.

Ein erfindungsgemäßes, elektrisch angetriebenes Kraftfahrzeug weist einen elektrischen Antriebsmotor zum Antreiben des Kraftfahrzeugs auf, wie auch eine Traktionsbatterie zum Bereitstellen einer elektrischen Batteriespannung. Das Kraftfahrzeug beinhaltet auch eine Schaltungsanordnung, die aus der Batteriespannung eine Versorgungsspannung bereitstellt, mit welcher der Antriebsmotor versorgbar ist. Eine Recheneinrichtung des Kraftfahrzeugs ist dazu ausgelegt, im Betrieb des Kraftfahrzeugs zumindest einen Betriebsparameter des Antriebsmotors und/oder der Schaltungsanordnung zu erfassen und zu diesem Betriebsparameter Parameterwerte in einer Speichereinrichtung abzuspeichern, aus denen ein technischer Zustand des Kraftfahrzeugs ermittelt werden kann. Dabei werden ausschließlich solche Parameterwerte des Betriebsparameters (T1,T2,n,I) abgespeichert, welche größer als ein vorgegebener Maximalgrenzwert sind und/oder welche kleiner als ein vorgegebener Minimalgrenzwert sind.

Die mit Bezug auf das erfindungsgemäße Verfahren vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung näher erläutert. Dabei veranschaulicht die einzige Figur in schematischer und höchstabstrakter Darstellung ein Kraftfahrzeug gemäß einer Ausführungsform der Erfindung.

Ein in der Figur schematisch dargestelltes Kraftfahrzeug 1 ist beispielsweise ein Personenkraftwagen. Das Kraftfahrzeug 1 ist ein elektrisch angetriebenes Fahrzeug, nämlich ein Elektrofahrzeug. Das Kraftfahrzeug 1 beinhaltet einen elektrischen Antriebsmotor 2, welcher zum Antreiben des Kraftfahrzeugs 1 dient. Der Antriebsmotor 2 ist zum Beispiel ein Synchronmotor bzw. ein bürstenloser Gleichstrommotor (BLDC). Der Antriebsmotor 2 wird mit einer elektrischen Versorgungsspannung UV versorgt, welche eine Wechselspannung ist und mittels einer Schaltungsanordnung 3 erzeugt wird. Die Schaltungsanordnung 3 beinhaltet einen Wechselrichter bzw. Inverter, welcher die Versorgungsspannung UV aus einer Batteriespannung UB bereitstellt, welche eine Gleichspannung ist. Die Batteriespannung UB wird von einer Traktionsbatterie 4 bereitgestellt.

Die Frequenz der Versorgungsspannung UV und hierdurch auch die Drehzahl des Antriebsmotors 2 werden mittels einer Steuereinrichtung 5 gesteuert. Diese Steuereinrichtung 5 ist ein Motorsteuergerät und kann beispielsweise einen Mikrocontroller und/oder einen digitalen Signalprozessor beinhalten.

Optional kann die Schaltungsanordnung 3 auch in den Antriebsmotor 2 integriert bzw. in einem Motorgehäuse angeordnet sein.

Es ist eine Recheneinrichtung 6 bereitgestellt, welche zum Erfassen unterschiedlichster Betriebsparameter der Schaltungsanordnung 3 sowie des Antriebsmotors 2 dient. Diese Recheneinrichtung 6 kann zum Beispiel auch in die Steuereinrichtung 5 integriert sein oder aber sie kann eine von der Steuereinrichtung 5 separate Komponente sein. Die Recheneinrichtung 6 erfasst die jeweils aktuellen Parameterwerte unterschiedlichster Betriebsparameter des Antriebsmotors 2 bzw. der Schaltungsanordnung 3. Im Ausführungsbeispiel erfasst die Recheneinrichtung 6 beispielsweise die jeweils augenblicklichen Werte der folgenden Betriebsparameter:
- der Temperatur T1 der Schaltungsanordnung 3, und insbesondere der Transistoren des Wechselrichters,
- der Temperatur T2 des Antriebsmotors 2, nämlich des Stators und/oder des Rotors,
- der Drehzahl n des Antriebsmotors 2, und
- eines elektrischen Strom I, welcher in der Schaltungsanordnung 3 und/oder in dem Antriebsmotor 2 fließt.

Die oben genannten Größen können mithilfe von jeweiligen Sensoren gemessen werden, die in der Schaltungsanordnung 3 bzw. dem Antriebsmotor 2 angeordnet und mit der Recheneinrichtung 6 elektrisch gekoppelt sind. Außerdem kann auch ein Zähler bereitgestellt sein, mittels welchem die Anzahl der Umdrehungen des Antriebsmotors 2 gemessen wird und der mit jeder Motorumdrehung inkrementiert wird. Auch diese Information kann dann an die Recheneinrichtung 6 übermittelt werden.

Die Recheneinrichtung 6 kann Daten in einer Speichereinrichtung 7 abspeichern. Hinsichtlich der Anordnung der Speichereinrichtung 7 sind unterschiedliche Ausführungsformen vorgesehen. So kann die Speichereinrichtung 7 ein Bestandteil der Recheneinrichtung 6 sein. Die Speichereinrichtung 7 kann auch in den Antriebsmotor 2 oder aber in die Schaltungsanordnung 3 integriert sein. Sie kann beispielsweise in ein Blechpaket des Antriebsmotors 2 oder aber einen Wickelkopfverguss eingelassen sein. Auch die Recheneinrichtung 6 kann gegebenenfalls in entsprechender Weise angeordnet sein.

Auch hinsichtlich der Ausgestaltung der Speichereinrichtung 7 sind unterschiedlichste Ausführungsformen sinnvoll möglich: Die Recheneinrichtung 7 kann einen RAM-Speicher aufweisen, in welchem die genannten Parameterwerte abgespeichert werden können. Sie kann aber auch einen RFID-Speicher beinhalten. Ein solcher Speicher kann gegebenenfalls auch in ein RFID-Sender/Empfänger-Modul integriert sein, welches gleichzeitig zur drahtlosen Datenkommunikation mit externen Kommunikationseinrichtung dienen kann.

In der Speichereinrichtung 7 werden Parameterwerte der oben genannten Betriebsparameter abgelegt, und zwar im Betrieb des Kraftfahrzeugs 2. Dabei werden ausschließlich solche Parameterwerte abgelegt, die größer als ein vorgegebener Maximalgrenzwert sind, und/oder solche Parameterwerte, die kleiner als ein vorgegebener Minimalgrenzwert sind. Auf diesem Wege werden Maximalwerte bzw. Minimalwerte der oben genannten Betriebsparameter in der Speichereinrichtung 7 abgespeichert. Mittels der Recheneinrichtung 6 kann dann auch die Häufigkeit berechnet werden, mit welcher die jeweiligen Betriebsparameter den jeweils zugeordneten Maximalgrenzwert überschreiten und/oder den jeweiligen Minimalgrenzwert unterschreiten.

In Abhängigkeit von den abgespeicherten Parameterwerten und/oder von der berechneten Häufigkeit kann dann ein technischer Zustand des Kraftfahrzeugs 1 ermittelt werden. Dies kann beispielsweise so aussehen, dass dieser Zustand mittels der Recheneinrichtung 6 ermittelt wird. Ergänzend oder alternativ kann die Recheneinrichtung 6 auch mit einer Kommunikationseinrichtung 8 gekoppelt sein, mittels welcher die abgespeicherten Daten an eine in der Figur nicht dargestellte fahrzeugexterne Recheneinrichtung übertragen werden können. Dann kann die fahrzeugexterne Recheneinrichtung den technischen Zustand des Kraftfahrzeugs 1 anhand der übertragenen Daten ermitteln.

Die Kommunikationseinrichtung 8 ist beispielsweise zur drahtlosen Datenübertragung ausgebildet. Zu diesem Zwecke kann sie eine Antenne 9 aufweisen, mittels welcher elektromagnetische Wellen ausgesendet und/oder empfangen werden können. Die Kommunikationseinrichtung 8 kann grundsätzlich gemäß einem beliebigen Kommunikationsstandard ausgebildet sein, etwa gemäß dem WLAN-Kommunikationsstandard und/oder dem Bluetooth®-Kommunikationsstandard und/oder einem Mobilfunkstandard und/oder nach der RFID-Technologie. Ergänzend oder alternativ zur Antenne 9 kann die Kommunikationseinrichtung 8 auch einen Anschluss bzw. eine Schnittstelle für eine drahtgebundene Kommunikation mit der fahrzeugexternen Recheneinrichtung aufweisen. Ein derartiger Anschluss dient dann dazu, die fahrzeugexterne Recheneinrichtung an die fahrzeugseitige Recheneinrichtung 6 anzuschließen, etwa in einer Werkstatt oder dergleichen.

Anhand der abgespeicherten Parameterwerte und/oder der berechneten Häufigkeit des Überschreitens bzw. Unterschreitens des jeweiligen Grenzwertes können - sei es mittels der internen Recheneinrichtung 6, sei es mittels der fahrzeugexternen Recheneinrichtung - beispielsweise folgende Fahrzeugparameter ermittelt werden, welche den technischen Zustand des Kraftfahrzeugs 1 beschreiben:
- eine maximale Lebensdauer des Antriebsmotors 2 und/oder der Schaltungsanordnung 3,
- ein Abnutzungsgrad des Stators und/oder des Rotors des Antriebsmotors 2,
- ein Abnutzungsgrad der Schaltungsanordnung 3,
- eine Zeitdauer bis zu einer nächsten Wartung des Antriebsmotors 2 und/oder der Schaltungsanordnung 3,
- eine Laufleistung des Antriebsmotors, etwa die Anzahl der Umdrehungen des Antriebsmotors 2, und
- ein Abnutzungsgrad einer elektrischen Isolation der Schaltungsanordnung 3 und/oder des Antriebsmotors 2.

Werden diese Informationen durch die fahrzeugseitige Recheneinrichtung 6 bestimmt, so können sie auch mittels einer Ausgabeeinrichtung des Kraftfahrzeugs 1 ausgegeben werden, so dass der Fahrer über den technischen Zustand seines Kraftfahrzeugs 1 informiert wird. Diese Daten können zum Beispiel auf einem Display im Innenraum des Kraftfahrzeugs 1 optisch angezeigt werden.

Die in der Speichereinrichtung 7 abgelegten Daten können auch an einen Host-Server des Fahrzeugherstellers übertragen werden. Hierbei kann der Fahrzeughersteller die entsprechenden Daten einer Vielzahl von Kraftfahrzeugen sammeln und auswerten. Beispielsweise kann der Fahrzeughersteller die empfangenen Daten einer statistischen Auswertung unterziehen, sodass neue Erkenntnisse für die Entwicklung von neuen Kraftfahrzeugen möglich sind.

## Patentansprüche

1. Verfahren zum Ermitteln eines technischen Zustands eines elektrisch angetriebenen Kraftfahrzeugs (1), bei welchem das Kraftfahrzeug (1) mittels eines elektrischen Antriebsmotors (2) angetrieben wird, der mit einer elektrischen Versorgungsspannung (UV) versorgt wird, welche aus einer Batteriespannung (UB) mittels einer Schaltungsanordnung (3) bereitgestellt wird,
umfassend die Schritte:
- Erfassen zumindest eines Betriebsparameters (T1,T2,n,I) der Schaltungsanordnung (3) im Betrieb des Kraftfahrzeugs (1) mittels einer Recheneinrichtung (6) des Kraftfahrzeugs (1),
- zu dem zumindest einen Betriebsparameter (T1,T2,n,I) Abspeichern von Parameterwerten in einer Speichereinrichtung (7) des Kraftfahrzeugs (1), wobei ausschließlich solche Parameterwerte des Betriebsparameters (T1,T2,n,I) abgespeichert werden, welche größer als ein vorgegebener Maximalgrenzwert sind und/oder welche kleiner als ein vorgegebener Minimalgrenzwert sind, und
- Ermitteln des technischen Zustands anhand der abgespeicherten Parameterwerte.

2. Verfahren nach Anspruch 1, **dadurch gekennzeichnet, dass** auch zumindest ein Betriebsparameter (T1,T2,n,I) des Antriebsmotors (2) im Betrieb des Kraftfahrzeugs (1) mittels der Recheneinrichtung (6) erfasst wird und der technische Zustand auch anhand von abgespeicherten Parameterwerten des Betriebsparameters (T1,T2,n,I) des Antriebsmotors (2) ermittelt wird.

3. Verfahren nach Anspruch 1 oder 2, **dadurch gekenn-zeichnet**, dass mittels der Recheneinrichtung (6) des Kraftfahrzeugs (1) der technische Zustand ermittelt wird.

4. Verfahren nach einem der vorhergehenden Ansprüche, **dadurch gekennzeichnet, dass** Daten mit den Parameterwerten von einer Kommunikationseinrichtung (8) des Kraftfahrzeugs (1) an eine fahrzeugexterne Recheneinrichtung übertragen werden und der technische Zustand mittels der fahrzeugexternen Recheneinrichtung ermittelt wird.

5. Verfahren nach einem der vorhergehenden Ansprüche, **dadurch gekennzeichnet, dass** als Betriebsparameter (T1,T2,n,I) ein elektrischer Parameter des Antriebsmotors (2) und/oder der Schaltungsanordnung (3) erfasst wird.

6. Verfahren nach einem der vorhergehenden Ansprüche, **dadurch gekennzeichnet, dass** in der Speichereinrichtung (7) ausschließlich solche Parameterwerte des Betriebsparameters (T1,T2,n,I) abgespeichert werden, welche in einem vorgegebenen Wertebereich liegen.

7. Verfahren nach Anspruch 6, **dadurch gekennzeichnet, dass** eine Häufigkeit errechnet wird, mit welcher der Betriebsparameter (T1,T2,n,I) den Maximalgrenzwert überschreitet und/oder den Minimalgrenzwert unterschreitet, und der technische Zustand in Abhängigkeit von dieser Häufigkeit ermittelt wird.

8. Verfahren nach einem der vorhergehenden Ansprüche, **dadurch gekennzeichnet, dass** als Betriebsparameter (T1,T2,n,I) zumindest einer der folgenden Betriebsparameter (T1,T2,n,I) erfasst wird:
- eine Temperatur (T1) der Schaltungsanordnung (3) und/oder eine Temperatur (T2) des Antriebsmotors (2) und/oder
- eine Drehzahl (n) des Antriebsmotors (2) und/oder
- ein elektrischer Strom (I), der in der Schaltungsanordnung (3) und/oder in dem Antriebsmotor (2) fließt,
- eine Anzahl von Umdrehungen des Antriebsmotors (2) und/oder
- das Alter der Schaltungsanordnung (3) und/oder des Antriebsmotors (2) und/oder
- eine Anzahl oder Häufigkeit von Werkstattbesuchen.

9. Verfahren nach einem der vorhergehenden Ansprüche, **dadurch gekennzeichnet, dass** als technischer Zustand zumindest einer der folgenden Fahrzeugparameter ermittelt wird:
- eine maximale Lebensdauer des Antriebsmotors (2) und/oder der Schaltungsanordnung (3) und/oder
- ein Abnutzungsgrad eines Stators und/oder eines Rotors des Antriebsmotors (2) und/oder
- ein Abnutzungsgrad der Schaltungsanordnung (3) und/oder
- eine Zeitdauer bis zu einer nächsten Wartung des Antriebsmotors (2) und/oder der Schaltungsanordnung (3) und/oder
- eine Laufleistung des Antriebsmotors (2) und/oder
- ein Abnutzungsgrad einer Isolation der Schaltungsanordnung (3) und/oder des Antriebsmotors (2).

10. Verfahren nach einem der vorhergehenden Ansprüche, **dadurch gekennzeichnet, dass** die Parameterwerte in einem RAM-Speicher und/oder einem RFID-Speicher abgespeichert werden.

11. Verfahren nach einem der vorhergehenden Ansprüche, **dadurch gekennzeichnet, dass** die Recheneinrichtung (6) und/oder die Speichereinrichtung (7) in den Antriebsmotor (2) integriert, insbesondere in ein Blechpaket oder einen Wickelkopfverguss des Antriebsmotors (2) eingelassen, ist.

12. Verfahren nach einem der vorhergehenden Ansprüche, **dadurch gekennzeichnet, dass** die Recheneinrichtung (6) und/oder die Speichereinrichtung (7) in einen Wechselrichter der Schaltungsanordnung (3) integriert, insbesondere in einen IGBT-Stapel eingelassen, ist.

13. Elektrisch angetriebenes Kraftfahrzeug (1) mit einem elektrischen Antriebsmotor (2) zum Antreiben des Kraftfahrzeugs (1), mit einer Traktionsbatterie zum Bereitstellen einer elektrischen Batteriespannung (UB), und mit einer Schaltungsanordnung (3), welche dazu ausgebildet ist, aus der Batteriespannung (UB) eine Versorgungsspannung (UV) bereitzustellen, mit welcher der Antriebsmotor (2) versorgbar ist, **gekennzeichnet durch** eine Recheneinrichtung (6), welche dazu ausgelegt ist, im Betrieb des Kraftfahrzeugs (1) zumindest einen Betriebsparameter (T1,T2,n,I) der Schaltungsanordnung (3) zu erfassen und zu diesem Betriebsparameter (T1,T2,n,I) ausschließlich solche Parameterwerte des Betriebsparameters (T1,T2,n,I), welche größer als ein vorgegebener Maximalgrenzwert sind und/oder welche kleiner als ein vorgegebener Minimalgrenzwert sind in einer Speichereinrichtung (7) abzuspeichern, aus denen ein technischer Zustand des Kraftfahrzeugs (1) ermittelbar ist.

## Claims

1. A method for determining a technical condition of an electrically powered motor vehicle (1), wherein the motor vehicle (1) is driven by means of an electric drive motor (2) which is supplied with an electric supply voltage (UV) which is provided from a battery voltage (UB) by means of a circuit arrangement (3), comprising the steps of:
- detecting at least one operational parameter (T1, T2, n, I) of the circuit arrangement (3) during operation of the motor vehicle (1) by means of a computing device (6) of the motor vehicle (1),
- for the at least one operational parameter (T1, T2, n, I), storing parameter values in a memory device (7) of the motor vehicle (1), wherein exclusively those parameter values of the operational parameter (T1, T2, n, I) are stored which are greater than a predetermined maximum threshold value and/or which are smaller than a predetermined minimum threshold value, and
- determining the technical condition using the stored parameter values.

2. The method according to Claim 1, **characterized in that** at least one operational parameter (T1, T2, n, I) of the drive motor (2) is also detected by means of the computing device (6) during operation of the motor vehicle (1) and the technical condition is also determined using stored parameter values of the operational parameter (T1, T2, n, I) of the drive motor (2).

3. The method according to claim 1 or 2, **characterized in that** the technical condition is determined by means of the computing device (6) of the motor vehicle (1).

4. The method according to one of the preceding claims, **characterized in that** data comprising the parameter values are transmitted from a communication device (8) of the motor vehicle (1) to a computing device outside the vehicle and the technical condition is determined by means of the computing device outside the vehicle.

5. The method according to one of the preceding claims,
**characterized in that** an electrical parameter of the drive motor (2) and/or the circuit arrangement (3) is detected as the operational parameter (T1, T2, n, I).

6. The method according to one of the preceding claims, **characterized in that** only those parameter values of the operational parameter (T1, T2, n, I) are stored in the memory device (7) which are in a predetermined value range.

7. The method according to claim 6, **characterized in that** a frequency is calculated where the operational parameter (T1, T2, n, I) exceeds the maximum threshold value and/or falls below the minimum threshold value, and the technical condition is determined as a function of said frequency.

8. The method according to one of the preceding claims, **characterized in that** at least one of the following operational parameters (T1, T2, n, I) is detected as an operational parameter (T1, T2, n, I):
- a temperature (TI) of the circuit arrangement (3) and/or a temperature (T2) of the drive motor (2) and/or
- a speed (n) of the drive motor (2) and/or
- an electric current (I), which flows in the circuit arrangement (3) and/or in the drive motor (2),
- a number of revolutions of the drive motor (2) and/or
- the age of the circuit arrangement (3) and/or the drive motor (2) and/or
- a number or frequency of workshop visits.

9. The method according to one of the preceding claims, **characterized in that** at least one of the following vehicle parameters is determined as the technical condition:
- a maximum service life of the drive engine (2) and/or the circuit arrangement (3) and/or
- a degree of wear of a stator and/or a rotor of the drive motor (2) and/or
- a degree of wear of the circuit arrangement (3) and/or
- a period of time until the next maintenance of the drive motor (2) and/or the circuit arrangement (3) and/or
- a running performance of the drive motor (2) and/or
- a degree of wear of an insulation of the circuit arrangement (3) and/or the drive motor (2).

10. The method according to one of the preceding claims, **characterized in that** the parameter values are stored in a RAM memory and/or an RFID memory.

11. The method according to one of the preceding claims, **characterized in that** the computing device (6) and/or the memory device (7) is integrated into the drive motor (2), and especially is embedded in a sheet metal package or a cast winding head of the drive motor (2).

12. The method according to one of the preceding claims, **characterized in that** the computing device (6) and/or the storage device (7) is integrated in an inverter of the circuit arrangement (3), in particular embedded in an IGBT stack.

13. An electrically powered motor vehicle (1) comprising an electric drive motor (2) for driving the motor vehicle (1), a traction battery for providing electric battery voltage (UB), and a circuit arrangement (3) which is configured to provide a supply voltage (UV) from the battery voltage (UB), which can be supplied to the drive motor (2), **characterized by** a computing device (6) which is configured to detect at least one operational parameter (T1, T2, n, I) of the circuit arrangement (3) during operation of the motor vehicle (1), and, in relation to this operational parameter (T1, T2, n, I), to exclusively store those parameter values of the operational parameter (T1, T2, n, I) which are greater than a predetermined maximum threshold value and/or which are smaller than a predetermined minimum threshold value in a memory device (7), from which parameters a technical condition of the motor vehicle (1) may be determined.

## Revendications

1. Procédé de détermination d'un état technique d'un véhicule automobile (1) entraîné de manière électrique, selon lequel le véhicule automobile (1) est entraîné au moyen d'un moteur d'entraînement électrique (2) qui est alimenté par une tension d'alimentation électrique (UV) laquelle est fournie par une tension de batterie (UB) au moyen d'une configuration de circuit (3), comprenant les étapes suivantes consistant à :
- saisir au moins un paramètre de fonctionnement (T1, T2, n, I) de la configuration de circuit (3) pendant le fonctionnement du véhicule automobile (1) au moyen d'une unité de calcul (6) du véhicule automobile (1),
- enregistrer en plus d'au moins un paramètre de fonctionnement (T1, T2, n, I) des valeurs de paramètre dans une unité de mémoire (7) du véhicule automobile (1), en ce qu'exclusivement de telles valeurs de paramètres du paramètre de fonctionnement (T1, T2, n, I) sont enregistrées qui sont supérieures à une valeur limite maximale prédéfinie et/ou inférieures à une valeur limite minimale prédéfinie, et
- déterminer l'état technique à l'aide des valeurs de paramètres enregistrées.

2. Procédé selon la revendication 1, **caractérisé en ce qu'**également au moins un paramètre de fonctionnement (T1, T2, n, I) du moteur d'entraînement (2) est saisi pendant le fonctionnement du véhicule automobile (1) au moyen de l'unité de calcul (6) et **en ce que** l'état technique est déterminé également à l'aide de valeurs de paramètres enregistrées du paramètre de fonctionnement (T1, T2, n, I) du moteur d'entraînement (2).

3. Procédé selon la revendication 1 ou 2, **caractérisé en ce que** l'état technique est déterminé au moyen de l'unité de calcul (6) du véhicule automobile (1).

4. Procédé selon l'une des revendications précédentes, **caractérisé en ce que** des données avec les valeurs de paramètres sont transmises d'un dispositif de communication (8) du véhicule automobile (1) à une unité de calcul externe au véhicule automobile et **en ce que** l'état technique est déterminé au moyen de l'unité de calcul externe au véhicule automobile.

5. Procédé selon l'une des revendications précédentes, **caractérisé en ce qu'**un paramètre électrique du moteur d'entraînement (2) et/ou de la configuration de circuit (3) est saisi comme paramètre de fonctionnement (T1, T2, n, I).

6. Procédé selon l'une des revendications précédentes, **caractérisé en ce qu'**exclusivement de telles valeurs de paramètres du paramètre de fonctionnement (T1, T2, n, I) sont enregistrées dans l'unité de mémoire (7), valeurs de paramètres qui sont comprises dans une plage de valeurs prédéfinies.

7. Procédé selon la revendication 6, **caractérisé en ce qu'**une fréquence est calculée à laquelle le paramètre de fonctionnement (T1, T2, n, I) dépasse la valeur limite maximale et/ou est en dessous de la valeur limite minimale, et **en ce que** l'état technique est déterminé en fonction de cette fréquence.

8. Procédé selon l'une des revendications précédentes, **caractérisé en ce qu'**au moins l'un des paramètres de fonctionnement (T1, T2, n, I) suivants est saisi comme paramètre de fonctionnement (T1, T2, n, I) :
- une température (T1) de la configuration de circuit (3) et/ou une température (T2) du moteur d'entraînement (2) et/ou
- une vitesse de rotation (n) du moteur d'entraînement (2) et/ou
- un courant électrique (I) qui circule dans la configuration de circuit (3) et/ou dans le moteur d'entraînement (2),
- un nombre de tours du moteur d'entraînement (2) et/ou
- l'âge de la configuration de circuit (3) et/ou du moteur d'entraînement (2) et/ou
- un nombre ou fréquence de passages au garage.

9. Procédé selon l'une des revendications précédentes, **caractérisé en ce qu'**au moins l'un des paramètres de véhicule automobile suivants est déterminé comme état technique :
- une durée de vie maximale du moteur d'entraînement (2) et/ou de la configuration de circuit (3) et/ou
- un degré d'usure d'un stator et/ou d'un rotor du moteur d'entraînement (2) et/ou
- un degré d'usure de la configuration de circuit (3) et/ou
- une durée jusqu'à un prochain entretien du moteur d'entraînement (2) et/ou de la configuration de circuit (3) et/ou
- un kilométrage du moteur d'entraînement (2) et/ou
- un degré d'usure d'un isolement de la configuration de circuit (3) et/ou du moteur d'entraînement (2).

10. Procédé selon l'une des revendications précédentes, **caractérisé en ce que** les valeurs de paramètres sont enregistrées dans une mémoire RAM et/ou une mémoire RFID.

11. Procédé selon l'une des revendications précédentes, **caractérisé en ce que** l'unité de calcul (6) et/ou l'unité de mémoire (7) est intégrée dans le moteur d'entraînement (2), en particulier encastrée dans un empilage de tôles ou dans un enrobage de têtes d'enroulement du moteur d'entraînement (2).

12. Procédé selon l'une des revendications précédentes, **caractérisé en ce que** l'unité de calcul (6) et/ou l'unité de mémoire (7) est intégrée dans un onduleur de la configuration de circuit (3), en particulier encastrée dans un empilement IGBT.

13. Véhicule automobile entraîné (1) de manière électrique comportant un moteur d'entraînement électrique (2) pour entraîner le véhicule automobile (1), une batterie de propulsion pour la mise à disposition d'une tension de batterie (UB) électrique, et une configuration de circuit (3) qui est réalisée pour mettre à disposition à partir de la tension de batterie (UB) une tension d'alimentation (UV) avec laquelle le moteur d'entraînement (2) peut être alimenté, **caractérisé par** une unité de calcul (6), laquelle est dimensionnée pour saisir pendant le fonctionnement du véhicule automobile (1) au moins un paramètre de fonctionnement (T1, T2, n, I) de la configuration de circuit (3) et d'enregistrer dans une unité de mémoire (7) en plus de ce paramètre de fonctionnement (T1, T2, n, I) exclusivement de telles valeurs de paramètres du paramètre de fonctionnement (T1, T2, n, I), lesquelles sont supérieures à une valeur limite maximale prédéfinie et/ou lesquelles sont inférieures à une valeur limite minimale prédéfinie, à partir desquelles un état technique du véhicule automobile (1) peut être déterminé.
